Europäisches Patentamt

European Patent Office

Office européen des brevets

(11) Publication number: **0 603 852 A1**

# EUROPEAN PATENT APPLICATION

(21) Application number: **93120677.5**

(22) Date of filing: **22.12.93**

(51) Int. Cl.5: **C08F 297/04**, C08G 81/02

(30) Priority: **23.12.92 US 995725**

(43) Date of publication of application:
**29.06.94 Bulletin 94/26**

(84) Designated Contracting States:
**AT BE DE ES FR GB IT NL**

(71) Applicant: **PHILLIPS PETROLEUM COMPANY**
**5th and Keeler**
**Bartlesville Oklahoma 74004(US)**

(72) Inventor: **Moczygemba, George Anthony**
**824 SE Crestland Drive**
**Bartlesville, OK 74006(US)**
Inventor: **Trepka, William James**
**Rural Route One,**
**Box 362-B1**
**Bartlesville, OK 74003(US)**

(74) Representative: **Dost, Wolfgang, Dr.rer.nat.,**
**Dipl.-Chem. et al**
**Patent- und Rechtsanwälte**
**Bardehle . Pagenberg . Dost . Altenburg .**
**Frohwitter . Geissler & Partner**
**Galileiplatz 1**
**D-81679 München (DE)**

(54) Tapered block copolymers of monovinylarenes and conjugated dienes.

(57) A method for preparing tapered block copolymers in a polymerization process by sequentially charging: (1) an initiator and monovinylaromatic monomers in the presence of a randomizer; (2) an initiator and monovinylaromatic monomers; (3) a mixture of monovinylaromatic and conjugated diene monomers; (4) conjugated diene monomers; and (5) a coupling agent; to produce a polymodal tapered block copolymer. The copolymers are particularly useful for applications such as packaging and food or drink containers which require transparency and good environmental stress crack resistance.

EP 0 603 852 A1

Field of the Invention

This invention relates to tapered block copolymers of monovinylarenes and conjugated dienes and methods of preparation of these tapered block copolymers.

Background of the Invention

There has developed in the polymer field, and especially in the packaging and related industries, a need for thermoplastic polymers that can be formed into transparent articles having high impact strength with good environmental stress crack resistance. There are needs for polymers which are useful as single components as well as for use in blends to improve properties of articles made from other commonly used polymers. The polymers satisfying these needs should be suitable for use with conventional extrusion, injection and blow molding equipment and also suitable for use in other methods of forming plastics into containers, tubes, films, fibers, and the like. Polystyrene, high impact polystyrene, branched block copolymers, and the like have been developed to meet these criteria with various degrees of satisfaction.

Much effort has been directed to the preparation of substantially transparent block copolymer resins with a variety of block structures produced by a variety of monomer addition sequences and a variety of coupling agents.

Polymerization of styrene and butadiene with organolithium initiators to produce block copolymers in which one or more non-elastomeric polymer blocks are bonded to one or more elastomeric polymer blocks has been disclosed. Block copolymers have been formed by sequential charges of the monomers, sometimes followed by introduction of one or more coupling agents into the reaction. Tapered blocks in styrene-butadiene block copolymers have been prepared by simultaneous charging of initiator and monomers to the polymerization zone. Literally thousands of various combinations of sequences of charges of monomers and coupling agents are possible.

Summary of the Invention

It is an object of this invention to provide a novel resinous tapered block copolymer of conjugated dienes and vinyl-substituted aromatic hydrocarbons from which can be made articles with improved environmental stress crack resistance.

A further object of this invention is to provide a novel process for making resinous tapered block copolymers of vinyl-substituted aromatic hydrocarbons.

The inventive copolymers are prepared under solution polymerization conditions in a reaction zone by:

(a) charging a monovinylaromatic monomer and an initiator in the presence of a randomizer and allowing polymerization to occur until essentially no free monomer is present; thereafter

(b) charging an initiator and a monovinylaromatic monomer and allowing polymerization to occur until essentially no free monomer is present; thereafter

(c) charging a mixture of monovinylaromatic monomer and conjugated diene monomer and allowing polymerization to occur until essentially no free monomer is present; thereafter

(d) charging a conjugated diene monomer and allowing essentially complete polymerization to occur until essentially no free monomer is present; and thereafter

(e) charging the reaction mixture with a coupling agent.

Detailed Description of the Invention

The polymers of this invention are characterized as resinous, polymodal block copolymers of at least one conjugated diene with at least one monovinylarene, having at least one random-tapered block and are prepared so that, when the choice of coupling agent permits, at least a portion of the final product is of a branched, coupled character.

The polymers prepared according to this invention are polymodal, resinous block copolymers which contain from about 55 to 95, preferably from about 60 to 90, more preferably from about 65 to 85, weight percent of copolymerized monovinyl substituted aromatic hydrocarbon monomer based on the weight of total monomers employed. Correspondingly, the inventive copolymers contain from about 45 to 5, preferably from about 40 to 10, and more preferably from about 35 to 15 weight percent copolymerized conjugated diene monomer based on the total weight of monomers incorporated into the copolymer.

The coupled portions of the resinous, polymodal block copolymers of this invention have terminal polymonovinylarene blocks on the extending arms of each linear or radial copolymer molecule, and further contain at least one central internal tapered block of monovinylarene and conjugated diene. The resinous copolymeric polymodal products also contain portions of linear uncoupled block copolymers of poly-(monovinylarene)-poly(conjugated diene); the linear uncoupled block copolymer content is considered to be an important portion of the resinous product with respect to its overall properties.

The unique polymodal tapered block character of the polymer and improved environmental stress crack resistance of articles made from the polymer are produced by the unique sequences of two separate initial charges of monovinylaromatic monomer and initiator, followed by a separate charge of a mixture of monovinylaromatic monomer and conjugated diene, followed by a separate charge of conjugated diene monomer, and a subsequent coupling step. The first initiator charge produces active living monovinyl aromatic component polymer blocks with alkali metal atoms (initiator) on at least one end to form active reaction sites. Each subsequent monomer charge adds monomer to the living polymer chain at the alkali metal reaction site. At each stage of charging, polymerization is allowed to continue until essentially no free monomer is present.

With each subsequent charge which includes initiator a new polymer-lithium species will be produced, and each subsequent monomer charge has an opportunity for polymerization of part of the charge with each of the existing polymer-lithium species. After virtually complete polymerization of the final charge, the active living linear block copolymers are charged with a difunctional or polyfunctional coupling agent to allow coupling of each of the living species with each of the other living species or with others of the same living species to form the desired polymodal tapered block copolymers. If the coupling agent is not 100 percent efficient and/or if less than a stoichiometric amount is used, there can be some uncoupled terminated polymer chains of each of the species in the final reaction mixture.

The charging sequence of this invention and the resulting polymers at each stage are exemplified using a selected monovinylarene monomer and conjugated diene in the following table.

TABLE 1

| Invention Charging Sequence | | |
| --- | --- | --- |
| Charge | Contents of Charge | Resulting Polymer Chains |
| (a) | randomizer, initiator$_1$ and styrene$_1$ | $S_1$-Li$_1$ |
| (b) | initiator$_2$ and styrene$_2$ | $S_1$-$S_2$-Li$_1$<br>$S_2$-Li$_2$ |
| (c) | butadiene$_1$ and styrene$_3$ | $S_1$-$S_2$-$B_1$/$S_3$-Li$_1$<br>$S_2$-$B_1$/$S_3$-Li$_2$ |
| (d) | butadiene$_2$ | $S_1$-$S_2$-$B_1$/$S_3$-$B_2$-Li$_1$<br>$S_2$-$B_1$/$S_3$-$B_2$-Li$_2$ |
| (e) | epoxidized vegetable oil | polymodal tapered block polymers with styrene terminal blocks |
| where S = styrene<br>B = butadiene<br>B/S = tapered block<br>subscripts = designation of the numerical order in which that particular component was charged or formed.<br>Li = residue from a monoalkali metal initiator remaining on the end of the polymerization chain prior to termination or coupling. | | |

The randomizer is usually added with the diluent initially charged to the reactor. The third charge (c) which has two monomers may be either a mixture of the two monomers or simultaneous charging of two separate monomers.

While additional charges, with or without initiator, are possible, the process preferably consists essentially of the four monomer charge steps plus a coupling step set out above.

As can be seen from the intermediate products listed in the charging sequence table above, there are at least two distinct species of polymer chains before coupling. Thus, polymodal tapered block copolymers comprising relatively high and low molecular weight species can be produced.

Tapered blocks in each of the growing polymer chains are produced by simultaneously charging with both monomers in the third step shown above in the table of the inventive charging sequence.

The weight ratio of monovinyl substituted aromatic monomer to conjugated diene monomer in charge (c) is from about 1:0.63 to about 1:2, preferably from about 1:0.67 to about 1:1.8, and more preferably from about 1:0.8 to about 1:1.5.

The randomizer regulates tapering or random polymerization of the monovinylaromatic monomer and the conjugated diene in a mixed monomer charge, but the diene still enters into the chain faster than the monovinyl substituted aromatic; therefore, when both the monovinylaromatic monomer and the conjugated diene are present, the block tapers gradually from an essentially polybutadiene block to an essentially monovinyl substituted aromatic polymer segment. Prior to coupling, all of the living polymer chains have monovinylaromatic terminal blocks on one end because of the initial monovinylaromatic charge and charge (b) made with initiator; the living ends of the chains will have conjugated diene blocks because of the fourth (d) charge containing only conjugated diene monomer.

In addition to the sequence of additions of the monomers and of the initiator, it is important to control the amount of each monomer and initiator addition at each stage or increment so that a suitable proportion of block sizes and proportion of polymodality is obtained. It is feasible to stretch out over an interval of time the addition of one or more of the increments of initiator and/or the input of the appropriate monovinylarene monomer charge, thus spreading (increasing) further the polymodality of the resulting product upon coupling.

The process of this invention can be carried out with any of the organomonoalkali metal compounds of the formula RM wherein R is an alkyl, cycloalkyl or arylcarbanion containing 4 to 8 carbon atoms and M is an alkyl metal cation. The presently preferred initiators are alkylmonolithium compounds, especially n-butyllithium or sec-butyllithium.

The conjugated diene monomers which can be used contain 4 to 6 carbon atoms and include 1,3-butadiene, 2-methyl-1,3-butadiene, 2-ethyl-1,3-butadiene, 2,3-dimethyl-1,3-butadiene and 1,3-pentadiene and mixtures thereof. Presently preferred is 1,3-butadiene.

The monovinylaromatic monomers which can be used contain 8 to 12 carbon atoms and include styrene, alpha-methylstyrene, 4-methylstyrene, 3-methylstyrene, 2-methylstyrene, 4-ethylstyrene, 3-ethylstyrene, 2-ethylstyrene, 4-tertbutylstyrene, 2,4-dimethylstyrene and condensed aromatics such as vinyl napthalene and mixtures thereof. Presently preferred is styrene.

The polymerization process is carried out in a hydrocarbon diluent at any suitable temperature in a range of -10° to 150°C, preferably in the range of 0° to 110°C, at pressures sufficient to maintain the reaction mixture substantially in the liquid phase. Preferred hydrocarbon diluents include linear and cycloparaffins such as butane, pentane, hexane, octane, cyclohexane, cyclopentane and mixtures thereof. Presently preferred is cyclohexane. Generally the temperature is such that the resulting polymer is in solution.

Small amounts of polar compounds are used in the hydrocarbon diluent to improve the effectiveness of alkylmonoalkali metal initiators such as n-butyllithium and to effect partial randomization of the vinylarene/conjugated diene so as to increase the random portion of the tapered block. Examples of polar compounds which can be advantageously employed are ethers, thioethers (sulfides) and tertiary amines. It is usually preferred to use ethers and sulfides in which the radicals attached to the oxygen or sulfur atoms are hydrocarbon radicals. Specific examples of such polar materials include dimethyl ether, diethyl ether, ethyl methyl ether, ethyl propyl ether, di-n-propyl ether, di-n-octyl ether, anisole, dioxane, 1,2-dimethoxyethane, dibenzyl ether, diphenyl ether, 1,2-dimethoxybenzene, tetramethylene oxide (tetrahydrofuran), dimethyl sulfide, diethyl sulfide, di-n-propyl sulfide, di-n-butyl sulfide, methyl ethyl sulfide, dimethylethylamine, tri-n-ethylamine, tri-n-propylamine, tri-n-butylamine, trimethylamine, triethylamine, tetramethylethylenediamine, tetraethylethylenediamine, N,N-di-methylaniline, N-methyl-N-ethylaniline, N-methylmorpholine, and the like. It is to be understood also that mixtures of these polar compounds can be employed in the practice of the present invention. The polar compounds are generally used in admixture with the hydrocarbon diluent. Presently preferred are either tetrahydrofuran or diethyl ether.

The initial monovinylaromatic charge is made with the randomizer present for the additional effect of causing the monovinylaromatic component resulting from each initiator charge to be of relatively narrow molecular weight distribution. By varying the amounts of initiator in each of the two charges having initiator the differences in molecular weights of the monovinylaromatic components resulting from each of the two charges can be increased. Surprisingly, superior results are obtained by having the monovinylaromatic components resulting from each initiator charge be of relatively narrow molecular weight distribution while having a relatively broad molecular weight distribution in the final polymodal polymer.

The polymerization is carried out in a substantial absence of oxygen and water, preferably under an inert gas atmosphere. Prior to the coupling step, the reaction mass contains a very high percentage of molecules (polymer chains) in which an alkali metal cation is positioned at one end of each polymer chain. Impurities in the feed such as water or alcohol reduce the amounts of monoalkali metal polymer in the reaction mass.

After virtually complete polymerization of the final charge added to the polymer, a suitable difunctional or polyfunctional coupling agent is added. As used here, the term "coupling" means the bringing together and joining, by means of one or more central coupling atoms or coupling moieties, two or more of the living monoalkali metal-terminated polymer chains. A wide variety of compounds for such purposes can be employed.

Among the suitable coupling agents are the di- or multivinylaromatic compounds, di- or multiepoxides, di- or multiisocyanates, di- or multiimines, di- or multialdehydes, di- or multiketones, alkoxytin compounds, di- or multihalides, particularly silicon halides and halosilanes, mono-, di-, or multianhydrides, mono-, di-, or multiesters, preferably the esters of monoalcohols with polycarboxylic acids, diesters which are esters of monohydric alcohols with dicarboxylic acids, lactones, and the like, including combination type compounds containing two or more groups and mixtures.

Examples of suitable vinylaromatic coupling agents include, but are not limited to, divinylbenzene, 1,2,4-trivinylbenzene, 1,3-divinylnaphthalene, 1,3,5-trivinylnaphthalene, 2,4-divinylbiphenyl, p-diisopropenylbenzene, and the like. Of these, the divinylaromatic hydrocarbons are preferred, particularly divinylbenzene in either its ortho, meta, or para isomer. Commercial divinylbenzene which is a mixture of the three isomers and other compounds is satisfactory.

Epoxidized hydrocarbon polymers such as epoxidized liquid polybutadiene and epoxy compounds such as 1,2; 5,6; 9,10-triepoxydecane, and the like, can be used.

Organoalkyl phosphites and arylalkyl phosphites are considered useful as coupling agents in this invention.

Examples of suitable multiisocyanates include benzene-1,2,4-triisocyanate, naphthalene-1,2,5,7-tetraisocyanate, and the like. Commercially available products known as PAPI-1, a polyarylpolyisocyanate having an average of 3 isocyanate groups per molecule and an average molecular weight of about 380 are suitable.

The multiimines, also known as multiaziridinyl compounds, such as those containing 3 or more aziridine rings per molecule, are useful. Other compounds useful as coupling agents include tetravinyl silane, trivinyl phosphine, the triaziridinyl phosphine oxides or sulfides such as tri(1-aziridinyl)phosphine oxide, tri(2-methyl-1-aziridinyl)phosphine oxide, tri(2-ethyl-3-decyl-1-aziridinyl)phosphine sulfide, and the like.

The multialdehydes are represented by compounds such as 1,4,7-naphthalenetricarboxyaldehyde, 1,7,9-anthracenetricarboxyaldehyde, 1,3,5-pentanetricarboxyaldehyde, and similar multialdehyde-containing aliphatic and aromatic compounds. The multiketones are represented by compounds such as 1,4,9,10-anthracenetetrone, 2,3-diacetonylcyclohexanone, and the like. Examples of the multianhydrides include pyromellitic dianhydride, styrene-maleic anhydride copolymers, and the like. Examples of the multiesters include diethyladipate, triethylcitrate, 1,3,5-benzenetricarboxylic acid, triethyl ester, and the like.

Among the multihalides are the silicon tetrahalides such as silicon tetrachloride, silicon tetrabromide, and silicon tetraiodide; the trihalosilanes such as trichlorosilane, trichloroethylsilane, tribromobenzylsilane, and the like; and the multihalogen-substituted hydrocarbons, such as 1,3,5-tri(bromomethyl)benzene, 2,5,6,9-tetrachloro-3,7-decadiene, and the like, in which the halogen is attached to a carbon atom which is alpha to an activating group such as an ether linkage, a carbonyl group, or a carbon-to-carbon double bond. Substituents inert with respect to lithium atoms in the terminally reactive polymer can also be present in the active halogen-containing compounds. Alternatively, other suitable reactive groups different from the halogens as described above can be present.

Examples of compounds containing more than one type of functional group include 1,3-dichloro-2-propanone, 2,2-dibromo-3-decanone, 2,4-dibromo-3-pentanone, 1,2,4,5-diepoxy-3-pentanone, 1,2; 4,5-diepoxy-3-hexanone, 1,2; 11,12-diepoxy-8-pentadecanone, 1,3; 18,19-diepoxy-7,14-eicosanedione, and the like.

Other metal multihalides, particularly those of tin, lead, or germanium, can be employed as coupling and branching agents. Silicon or other metal multialkoxides, such as silicon tetraethoxide, are also suitable coupling agents.

Useful multifunctional coupling agents include epoxidized vegetable oils such as epoxidized soybean oil, epoxidized linseed oil and the like or mixtures thereof.

The presently preferred coupling agent is epoxidized vegetable oil. Most preferred is epoxidized soybean oil.

Any effective amount of the coupling agent can be employed. While the amount is not believed to be particularly critical, a stoichiometric amount relative to the active polymer-alkali metal tends to promote maximum coupling as a generality. Presently preferred is an amount of coupling agent slightly greater than stoichiometric relative to the active polymer-alkali metal. However, less than stoichiometric amounts can be used for higher degrees of coupling where desired for particular products of broadened molecular weight distribution.

Typically, the total amount of coupling agent is in the range of about 0.1 to 10 phm (parts per 100 parts of total monomers employed in the polymerization). Presently preferred is about 0.2 to about 0.5 phm, depending upon amounts of initiator used.

At the conclusion of the coupling process, the coupled polymer may still contain bound alkali metal atoms depending on the type of coupling agent employed. The system is treated with an active compound such as water, alcohol, phenols, carbon dioxide or linear saturated aliphatic mono- and dicarboxylic acids to remove any remaining alkali metal from the copolymer.

Commonly used stabilization processes use a combination of a hindered phenol and an organophosphite, specifically, octadecyl 3-(3',5'-di-t-butyl-4'-hydroxyphenyl) propionate and tris-nonylphenylphosphite. After stabilization, the hydrocarbon diluent is then flashed off the polymer solution to increase the solids content.

The polymer cement, i.e. the polymer in the polymerization solvent, usually contains about 10 to 40, more usually 20 to 35, weight percent solids, the balance solvent. Preferably, but not necessarily, the polymer cement is flashed to remove by evaporation a portion of the solvent so as to reduce the solvent content to a concentration of about 0 to 50, more usually about 0 to 10, weight percent (corresponding to a solids content of about 100 to 50, more usually about 100 to 90, weight percent).

Flashing of the polymer cement may be followed by desolventizing extrusion with vacuum in commercial production or by vacuuming processes to achieve consistent solvent content of less than 0.3 weight percent.

The resinous copolymeric products can be, and normally are, compounded with anti-oxidants, anti-blocking agents, release agents and the like, as known in the compounding arts.

A typical charging sequence and useful ranges of amounts of the charges is given in Table 2.

## TABLE 2

### Ranges of Amounts of Components in a Typical Invention Charging Sequence

| Step | Component[a] | Broad Range[b] | Preferred Range[b] | More Preferred Range[b] |
|---|---|---|---|---|
| (a) | randomizer[c] | 0.001-0.10 | 0.005-0.085 | 0.015-0.060 |
| | initiator | 0.005-1.50 | 0.01 -0.1 | 0.02 -0.1 |
| | monovinylarene monomer | 20-60 | 30-50 | 35-45 |
| (b) | initiator | 0.005-1.5 | 0.01-1.0 | 0.02-0.1 |
| | monovinylarene monomer | 5-25 | 10-20 | 12-18 |
| (c) | monovinylarene monomer and | 10-35 | 18-25 | 20-22 |
| | conjugated diene monomer | 10-35 | 18-25 | 20-22 |
| (d) | conjugated diene monomer | 0-10 | 2-8 | 4-6 |
| (e) | coupling agent | 0.005-1.0 | 0.2-0.6 | 0.3-0.5 |

[a] Components within each charge having more than one can be added simultaneously or as a mixture, with the exception that the tetrahydrofuran randomizer in charge (a) may be already present in the diluent.

[b] Ranges of amounts are given in parts by weight per 100 parts by weight of total monomers (phm).

[c] For amounts of randomizer, refer to the following discussion of randomizers. To achieve high vinyl content, up to 3 phm randomizer may be used.

Based on the amounts of monomer additions shown in Table 2, assuming substantially complete (co)-polymerization of each monomer increment added at each step before proceeding to the next step, and assuming equivalent rates of initiation and propagation, the following relative block sizes prior to coupling can be calculated (in which phm ≡ weight percent) as shown in Table 3 below. The molecular weights of each species before coupling are estimated by dividing the number of phms of monomers in each chain (species) by the number of moles of alkali metal initiator associated with each chain.

TABLE 3

Example Calculated Relative Polymer Chain Sizes Before Coupling Calculated from Ranges of Monomer Additions[a]

| Species | Broad Range | Intermediate Range | Narrow Range |
|---|---|---|---|
| (a) | | | |
| S₁-B₄-B₁/S₃-B₂ (Mw) | 94-154,000 | 109-139,000 | 116-131,000 |
| S₄ (phm) | | | |
| S₂ (phm) | 20-60 | 30-50 | 35-45 |
| B₁/S₃ (phm) | | | |
| B₂ (phm) | 80-40 | 70-50 | 65-55 |
| (b) | | | |
| S₂-B₁/S₃-B₂ (Mw) | 51-26,000 | 45-32,000 | 42-35,000 |
| S₂ (phm) | | | |
| B₁/S₃ (phm) | | | |
| B₂ (phm) | 80-40 | 70-50 | 65-55 |

[a]Calculations based on use of 0.03 phm initiator in the first initiator charge and 0.07 phm initiator in the second initiator charge. Similar calculations can be made for other initiator levels.

Likewise, the molecular weights and the relative amounts of each of the polymer species present after coupling can be calculated. These are shown in Table 4.

### TABLE 4

#### Molecular Weights of Polymer Species in the Invention Polymers[a]

| Polymer Species | Final Fraction | Molecular Weight (Range) |
|---|---|---|
| $S_1-S_2-B_1/S_3-B_2-x-B_2-S_3/B_1-S_2-S_1$ | 0.063 | 232-262,000 |
| $S_1-S_2-B_1/S_3-B_2-x-B_2-S_3/B_1-S_2$ | 0.294 | 156-166,000 |
| $S_2-B_1/S_3-B_2-x-B_2-S_3/B_1-S_2$ | 0.343 | 70-84,000 |
| $S_2-B_1/S_3-B_2$ | 0.210 | 35-42,000 |
| $S_1-S_2-B_1/S_3-B_2$ | 0.090 | 116-131,000 |

$S$ = monovinylarene block

$B$ = conjugated diene block

$B/S$ = tapered block

$x$ = residual coupling agent or coupling site

subscripts are indications of the charges which were the source of the polymer blocks.

[a] Calculations based on use of 0.03 phm initiator in the first initiator charge and 0.07 phm initiator in the second initiator charge. Similar calculations can be made for other initiator levels.

The amounts of polar compounds used as randomizers in this invention will vary according to the reactivity and effectiveness of the particular randomizer used. For example, 1,2-dimethoxyethane, tetramethylethylenediamine and 1,2-dimethoxybenzene are much more efficient randomizers than most of the others listed above when used with the particular initiators and monomers used in the invention runs described below. However, tetrahydrofuran is often used because the reaction will go on to nearer completion in a shorter time after the initial reaction in the monomer rich environment. Also, there are dramatic variations in the amounts of each of these most efficient randomizers which will be needed. For example, for polymerizations such as those shown in the examples of invention runs in Table 5 of this application, about three and a half times as much tetrahydrofuran as 1,2-dimethoxyethane would be needed.

The amounts of polar compounds used as randomizers will also vary according to the desired molecular structure of the portions of tapered blocks which result from conjugated diene addition. For example, it has been observed that in reactions such as those shown in the invention runs listed in Table 5, 1,4 addition of butadiene notably exceeds 1,2 addition of butadiene when about 1.75 parts tetrahydrofuran per hundred parts total monomers is used in each of the charges which includes randomizer. When it is desirable that the tapered blocks of the polymer have more nearly equal amounts of 1,4 addition of butadiene and 1,2 addition of butadiene or only a little more 1,4 addition than 1,2 addition of butadiene, as much as 2.5 phm of tetrahydrofuran can be used.

Generally, when tetrahydrofuran is used as a randomizer and it is desired that 1,4 addition occur in excess of 1,2 addition, then the amounts needed are as shown in Table 5.

TABLE 5

| Example of Useful Amounts of Randomizer when THF is Used for Major 1,4 Addition and Minor 1,2 Conjugated Diene Addition | | |
|---|---|---|
| Range | phm[a] | mhm[b] |
| Broad<br>Preferred<br>Most Preferred | 0.001 to 0.10<br>0.005 to 0.085<br>0.015 to 0.060 | 0.014 to 1.39<br>0.069 to 1.18<br>0.208 to 0.833 |
| [a]phm is parts per hundred parts total monomers.<br>[b]mhm is gram-millimoles per hundred grams of total monomers. | | |

When polymers with higher vinyl character are desired, then the useful amounts of tetrahydrofuran needed would be larger, perhaps as much as 2.5 phm. However, use of too much randomizer would result in excessive termination during polymerization and poor stability of the polymer.

Amounts of initiator employed are those which will produce a resin with desirable melt flow from which can be made articles with a good balance of properties including minimal blueness, good impact strength, good environmental stress crack resistance and flexural modulus. Presently preferred are amounts of initiator in each of the two initiator charges sufficient to obtain a block copolymer having a melt flow ranging from about 2 to about 40 g/10 minutes as determined by ASTM D1238-73, condition G. The amount of initiator contemplated as useful in each of the three charges having initiator is shown in Table 6.

TABLE 6

| Amounts of Initiator in Each Charge | | | | |
|---|---|---|---|---|
| Charge | Units | Broad Range | Preferred Range | More Preferred Range |
| (1)<br>$Li_1$<br>(2)<br>$Li_2$ | phm[a]<br>mhm[b]<br>phm<br>mhm | 0.005 - 1.5<br>0.078 - 23.4<br>0.005 - 1.5<br>0.078 - 23.4 | 0.01 - 1.0<br>0.156 - 15.6<br>0.01 - 1.0<br>0.156 - 15.6 | 0.02 - 0.1<br>0.312 - 1.56<br>0.02 - 0.1<br>0.312 - 1.56 |
| [a]phm is parts per hundred parts total monomer.<br>[b]mhm is gram-millimoles per hundred grams of total monomers. | | | | |

The ratio of the amounts of initiator in each of the charges having initiator can be represented as 1:1-300.

$Li_1 : L_2 :: 1 : 1\text{-}300$

wherein

10

$Li_1$ = initiator in the first charge

$Li_2$ = initiator in the second charge

The amounts of initiators are selected such that the amount in the second charge is at least equal to or slightly greater than that employed in the first charge.

Varying the ratios of the initiator charges will result in variations of the proportionate amounts of species present in the copolymer. While not wishing to be bound by theory, the inventors believe that when, for example, the first and second initiator charges are made in a 3:7 ratio and a difunctional coupling agent is used, the following polymer species are present in the inventive copolymer in the relative amounts indicated.

TABLE 7

| Calculated Proportionate Amounts of Species Present in Invention Copolymer with Difunctional Coupling | |
| --- | --- |
| Species | Relative Amount |
| $S_1$-$S_2$-$B_1$/$S_3$-$B_2$-x-$B_2$-$S_3$/$B_1$-$S_2$-$S_1$ | 0.063 |
| $S_1$-$S_2$-$B_1$/$S_3$-$B_2$-x-$B_2$-$S_3$/$B_1$-$S_2$ | 0.294 |
| $S_2$-$B_1$/$S_3$-$B_2$-x-$B_2$-$S_3$/$B_1$-$S_2$ | 0.343 |
| + | |
| uncoupled terminated polymer chains | 0.30 |
| where S = monovinylarene block<br>B = conjugated diene block<br>B/S = tapered block<br>x = residual coupling agent or coupling site<br>and the subscripts are indications of the charges which were the source of the polymer blocks. | |

The resinous polymodal in situ made copolymer products of this invention can be blended with other polymers such as high impact polystyrene, general purpose polystyrene, acrylonitrile-butadiene-styrene copolymers (ABS), styrene-acrylonitrile copolymers (SAN), other styrene copolymers and polyolefins and olefin copolymers. For example, when blended with general purpose polystyrene, broad ranges include using amounts such as from about 5 to about 90 weight percent polystyrene, more usually from about 10 to about 80 weight percent polystyrene, and most preferably from about 35 to about 65 weight percent polystyrene with the balance being one or more of the polymodal resinous copolymer products of this invention. These blends can be economical ways of gaining the desirable attributes of both polystyrene and the invention polymers.

The compositions of this invention can be extruded, thermoformed, injection molded, blow molded, or made into films or sheets. Articles made from the compositions of this invention are transparent, have excellent environmental stress crack resistance to fats and oils, and have other physical properties within acceptable ranges for such applications as drinking cups, lids, bottles, other food containers, medical drainage units, shrink wrap and over wrap.

Test Procedures

The environmental stress crack resistance potential of the block copolymers was determined in an accelerated test referred to as the Puncture Test. Test specimens about 2 inches square were cut from an interior layer about 0.015 inches thick from a coil or roll of extruded sheet. The side of the film or sheet facing away or furtherest from the center of the coil or roll, of course, must "stretch" or cover more distance than the side closest to the center of the coil or roll. Results obtained from the outside part of a rolled layer are termed "curl down" and those from the inside part are termed "curl up".

Each specimen was clamped over a hole about 1 inch in diameter and 4 drops of soybean oil was placed on the specimen over the hole. A rounded tipped stainless steel rod about 1/2 cm in diameter was weighted with a 2 kg load and brought into contact with the specimen. The time to failure in minutes was recorded. Ten specimens of each run were tested and the results were averaged.

The puncture test results appear to correlate well with other environmental stress crack resistance test results and are obtained more quickly.

Other properties were tested using ASTM procedures as indicated in the examples.

11

The following examples will describe in more detail the experimental process used and the polymodal tapered block copolymers with vinylarene terminal blocks obtained as a result of the process.

Examples

In the following examples, the copolymer melt flow rates were determined by the method of ASTM D 1238, Condition 200/5.0. The values of melt flow are expressed as grams per ten minutes (g/10 min). Quantities of reagents are usually expressed in parts per hundred monomer (phm) based on the total weight of monovinylarene and conjugated diene employed. Styrene and butadiene were chosen as monomers to exemplify the invention, and randomizer, initiator, coupling agent and diluent appropriate for these monomers were used.

Polymerization runs were carried out under nitrogen in a stirred, jacketed, stainless steel 7.6-liter reactor employing essentially anhydrous reactants and conditions. The cyclohexane diluent, which contained 0.04 phm tetrahydrofuran (THF) in each polymerization except in Example IV, was preheated to about 50°C before monomers were charged to the reactor. In polymerization steps in which both butadiene and styrene were charged, they were charged simultaneously as a mixture.

In the coupling step, the Vikoflex® 7170 coupling agent used is an epoxidized vegetable oil commercially available from Viking Chemical Company. In the terminating step, carbon dioxide from a pressurized container was admitted to provide about 0.4 phm carbon dioxide to the reactor. The stabilizing mixture added in the stabilizing step contained a hindered phenol [octadecyl 3-(3',5'-di-t-butyl-4'-hydroxyphenyl) propionate, Irganox® 1076 from Ciba-Geigy] and an organic phosphite (tris-nonylphenyl phosphite, Weston TNPP). Each stabilizer was dissolved separately in cyclohexane and mixed together and then enough of the mixture was added to the reactor to provide 0.25 phm hindered phenol and 1 phm organic phosphite. In Runs 1 and 2 a microcrystalline wax (Be Square® 195) was also added as an antiblocking agent.

Following the stabilization step, each copolymer solution was flashed at 178°C to remove a portion of the diluent. Substantially all of the remaining diluent was removed in a vacuum oven.

Example I

This example describes four invention polymerization runs that were carried out to produce polymodal, coupled, tapered block styrene-butadiene copolymers with resinous terminal blocks. In each of the four runs (1A, 1B, 1C, and 1D), 2000 g total monomers (butadiene and styrene) were used. About 76 weight percent of the total amount of cyclohexane diluent (3130 g) was charged initially. The remaining cyclohexane diluent was added during the run as a diluent or flush for the various reactants added in subsequent steps. In these four polymerizations, the weight ratio of monomers charged was 75/25 styrene/butadiene.

The charges and the results of the runs are summarized in Table 8. Tapered butadiene/styrene segments were formed in step 3 by charging both butadiene and styrene monomers. Devolatilized copolymers 1A, 1B, 1C, and 1D were dry blended together to produce invention copolymer 1. Copolymer 1 had a melt flow of 6.9 g/10 min.

12

TABLE 8

Invention Runs

| Components[a] | Run 1A | Run 1B | Run 1C | Run 1D |
|---|---|---|---|---|
| **Step 1** | | | | |
| $NBL_1$, phm | 0.030 | 0.025 | 0.030 | 0.030 |
| $S_1$, phm | 40 | 40 | 40 | 40 |
| Polymerization Time, min | 12 | 12 | 12 | 12 |
| Peak Polymerization | | | | |
| Temperature, °C | 94 | 92 | 89 | 84 |
| **Step 2** | | | | |
| $NBL_2$, phm | 0.080 | 0.075 | 0.050 | 0.065 |
| $S_2$, phm | 15 | 15 | 15 | 15 |
| Polymerization Time, min | 12 | 12 | 14 | 12 |
| Peak Polymerization | | | | |
| Temperature, °C | 85 | 82 | 80 | 77 |
| **Step 3** | | | | |
| $B_1$, phm | 20 | 20 | 20 | 20 |
| $S_3$, phm | 20 | 20 | 20 | 20 |
| Polymerization Time, min | 20 | 20 | 20 | 20 |
| Peak Polymerization | | | | |
| Temperature, °C | 126 | 124 | 121 | 113 |
| **Step 4** | | | | |
| $B_2$, phm | 5 | 5 | 5 | 5 |
| Polymerization Time, min | 12 | 19 | 10 | 10 |
| Peak Polymerization | | | | |
| Temperature, °C | 94 | 90 | 96 | 98 |
| **Step 5 (Coupling)** | | | | |
| Vikoflex 7170, phm | 0.4 | 0.4 | 0.4 | 0.4 |
| Time, min | 16 | 16 | 16 | 16 |
| Temperature, °C | 94 | 93 | 95 | 86 |
| **Step 6 (Terminating)** | | | | |
| Water, phm | 0.2 | 0.2 | 0.2 | 0.2 |
| Carbon Dioxide, phm | 0.4 | 0.4 | 0.4 | 0.4 |
| Time, min | 25 | 25 | 25 | 25 |
| Temperature, °C | 95 | 95 | 98 | 99 |
| **Step 7 (Stabilizing)** | | | | |
| Stabilizer Mixture, phm | 1.25 | 1.25 | 1.25 | 1.25 |
| Time, min | 5 | 5 | 5 | 5 |
| Temperature, °C | 94 | 95 | 95 | 100 |
| **Recovered Resin** | | | | |
| Melt Flow, g/10 min | 16.7 | 10.1 | 2.2 | 4.3 |

[a] The symbols NBL, S, and B represent, respectively, n-butyllithium initiator, styrene, and butadiene. The subscript numbers refer to the numerical order in which that compound was used.

Example II

Three more polymerization runs were carried out according to the present invention. Runs 2A, 2B, and 2C were done as described in Example I. The charges and results of the runs are shown in Table 9. Again, the weight ratio of styrene to butadiene charged was 75 to 25. Copolymers 2A, 2B, and 2C were blended together after devolatilizing to form invention copolymer 2, which had a melt flow of 7.2 g/10 min.

TABLE 9

Invention Runs

| Components[a] | Run 2A | Run 2B | Run 2C |
|---|---|---|---|
| **Step 1** | | | |
| $NBL_1$, phm | 0.030 | 0.030 | 0.030 |
| $S_1$, phm | 40 | 40 | 40 |
| Polymerization Time, min | 12 | 12 | 12 |
| Peak Polymerization Temperature, °C | 87 | 82 | 84 |
| **Step 2** | | | |
| $NBL_2$, phm | 0.070 | 0.070 | 0.070 |
| $S_2$, phm | 15 | 15 | 15 |
| Polymerization Time, min | 12 | 12 | 12 |
| Peak Polymerization Temperature, °C | 78 | 78 | 77 |
| **Step 3** | | | |
| $B_1$, phm | 20 | 20 | 20 |
| $S_3$, phm | 20 | 20 | 20 |
| Polymerization Time, min | 24 | 20 | 20 |
| Peak Polymerization Temperature, °C | 120 | 115 | 113 |
| **Step 4** | | | |
| $B_2$, phm | 5 | 5 | 5 |
| Polymerization Time, min | 12 | 20 | 12 |
| Peak Polymerization Temperature, °C | 93 | 88 | 86 |
| **Step 5 (Coupling)** | | | |
| Vikoflex 7170, phm | 0.4 | 0.4 | 0.4 |
| Time, min | 16 | 16 | 16 |
| Temperature, °C | 92 | 92 | 85 |
| **Step 6 (Terminating)** | | | |
| Water, phm | 0.2 | 0.2 | 0.2 |
| Carbon Dioxide, phm | 0.4 | 0.4 | 0.4 |
| Time, min | 25 | 25 | 25 |
| Temperature, °C | 95 | 96 | 92 |
| **Step 7 (Stabilizing)** | | | |
| Stabilizer Mixture, phm | 1.25 | 1.25 | 1.25 |
| Time, min | 5 | 5 | 5 |
| Temperature, °C | 95 | 97 | 93 |
| **Recovered Resin** | | | |
| Melt Flow, g/10 min | 8.8 | 7.0 | 6.5 |

[a]The symbols NBL, S, and B represent, respectively, n-butyllithium initiator, styrene, and butadiene. The subscript numbers refer to the numerical order in which that compound was used.

14

Example III

A comparative copolymer 3 without tapered styrene butadiene blocks was used for comparison with the invention resins. The comparative coupled, block copolymer of styrene and butadiene was essentially the same as the invention copolymer except that sequential butadiene and styrene charges were used in place of the mixture of butadiene and styrene used in the invention copolymer. This comparative copolymer was prepared from about 75 weight percent styrene and about 25 weight percent butadiene and was polymodal before coupling. Similar charges of initiator and randomizer were used. The monomer addition sequences were S,S,B,S,B in weight ratios of 40,20,8,15,17 followed by coupling. Comparative copolymer 3 had a melt flow of 7.0 g/10 min.

Example IV

Two comparative copolymers were prepared to demonstrate the importance of using two rather than one initial styrene charges and the importance of the final butadiene segment made next preceeding the coupling step in the invention copolymer. Both polymerizations were carried out with a total monomer charge of 1500 g. About 79 weight percent of the cyclohexane diluent (3720 g) was charged initally. The rest of the diluent was added during the run as a diluent or flush for the other reactants. Sec-butyl lithium was used as the initiator in these polymerizations and THF was not used.

Copolymers 4A, 4B, 4C, and 4D were prepared with one initial styrene charge, one styrene/butadiene tapered block, and no final butadiene segment right before coupling. Table 10 describes the charges and results of these polymerizations. The styrene to butadiene weight ratio of the charged monomers was 75 to 25.

Copolymers 5A, 5B, 5C, and 5D were prepared as described above for copolymers 4A through 4D except that the styrene to butadiene weight ratio was 70 to 30. The charges and results are described in Table 11.

Comparative copolymer 4 was prepared by dry blending samples 4A, 4B, 4C, and 4D. Copolymer 4 had a melt flow of 7.5 g/ 10 min. Comparative copolymer 5 was prepared by dry blending samples 5A, 5B, 5C, and 5D. Copolymer 5 had a melt flow of 6.6 g/10 min.

TABLE 10

| Comparative Copolymer 4 | | | | |
|---|---|---|---|---|
| Components[a] | Run 4A | Run 4B | Run 4C | Run 4D |
| Step 1 | | | | |
| $SBL_1$, phm | 0.06 | 0.06 | 0.06 | 0.06 |
| $S_1$, phm | 50 | 50 | 50 | 50 |
| Polymerization Time, min | 10 | 10 | 10 | 10 |
| Peak Polymerization Temperature, °C | 68 | 69 | 68 | 69 |
| Step 2 | | | | |
| $SBL_2$, phm | 0.078 | 0.078 | 0.078 | 0.078 |
| $S_2$, phm | 25 | 25 | 25 | 25 |
| $B_1$, phm | 25 | 25 | 25 | 25 |
| Polymerization Time, min | 10 | 10 | 10 | 10 |
| Peak Polymerization Temperature, °C | 92 | 91 | 88 | 82 |
| Step 3 (Coupling) | | | | |
| Vikoflex 7170, phm | 0.4 | 0.4 | 0.4 | 0.4 |
| Time, min | 16 | 16 | 16 | 16 |
| Temperature, °C | 89 | 95 | 92 | 92 |
| Step 4 (Terminating) | | | | |
| Water, phm | 0.2 | 0.2 | 0.2 | 0.2 |
| Carbon Dioxide, phm | 0.4 | 0.4 | 0.4 | 0.4 |
| Time, min (Total) | 25 | 25 | 25 | 25 |
| Temperature, °C | 91 | 93 | 89 | 87 |
| Step 5 (Stabilizing) | | | | |
| Stabilizer Mixture, phm | 1.25 | 1.25 | 1.25 | 1.25 |
| Time, min | 5 | 5 | 5 | 5 |
| Temperature, °C | 95 | 94 | 89 | 89 |
| Recovered Resin | | | | |
| Melt Flow, g/10 min | 7.4 | 7.1 | 6.7 | 6.95 |

[a]The symbols SBL, S and B, represent, respectively, sec-butyllithium initiator, styrene and butadiene. The subscript numbers refer to the numerical order in which that compound was used.

Table 11

| Comparative Copolymer 5 | | | | |
|---|---|---|---|---|
| Components[a] | Run 5A | Run 5B | Run 5C | Run 5D |
| Step 1 | | | | |
| $SBL_1$, phm | 0.062 | 0.065 | 0.065 | 0.065 |
| $S_1$, phm | 40 | 40 | 40 | 40 |
| Polymerization Time, min | 12 | 12 | 12 | 12 |
| Peak Polymerization Temperature, °C | 56 | 60 | 63 | 58 |
| Step 2 | | | | |
| $SBL_2$, phm | 0.081 | 0.084 | 0.084 | 0.084 |
| $S_2$, phm | 30 | 30 | 30 | 30 |
| $B_1$, phm | 30 | 30 | 30 | 30 |
| Polymerization Time, min | 40 | 40 | 40 | 40 |
| Peak Polymerization Temperature, °C | 78 | 88 | 92 | 86 |
| Step 3 (Coupling) | | | | |
| Vikoflex 7170, phm | 0.40 | 0.40 | 0.40 | 0.40 |
| Time, min | 16 | 16 | 16 | 16 |
| Temperature, °C | 93 | 88 | 88 | 86 |
| Step 4 (Terminating) | | | | |
| Water, phm | 0.2 | 0.2 | 0.2 | 0.2 |
| Carbon Dioxide, phm | 0.4 | 0.4 | 0.4 | 0.4 |
| Time, min (Total) | 25 | 25 | 25 | 25 |
| Temperature, °C | 87 | 87 | 92 | 89 |
| Step 5 (Stabilizing) | | | | |
| Stabilizer Mixture, phm | 1.25 | 1.25 | 1.25 | 1.25 |
| Time, min | 5 | 5 | 5 | 5 |
| Temperature, °C | 85 | 87 | 85 | 85 |
| Recovered Resin | | | | |
| Melt Flow, g/10 min | 4.9 | 6.9 | 7.2 | 5.9 |

[a]The symbols SBL, S and B, represent, respectively, sec-butyllithium initiator, styrene and butadiene. The subscript numbers refer to the numerical order in which that compound was used.

Example V

Two more comparison copolymers were prepared to demonstrate the importance of the structural features of the invention copolymers for environmental stress crack resistance. The styrene to butadiene weight ratio of the charged monomers was 74.4 to 25.5.

Copolymers 6A, 6B, 6C, and 6D were made with one initial styrene charge, two tapered butadiene/styrene blocks, and no terminal butadiene segment prior to coupling. The polymerization charges and results are summarized in Table 12. These four copolymers were dry blended to form comparison copolymer 6, which had a melt flow of 7.2 g/10 min.

Copolymers 7A, 7B, 7C, and 7D were prepared with styrene, styrene, butadiene, styrene, and butadiene segments, in that sequence, and then coupled. These copolymers contain no tapered blocks. The polymerization charges and results are shown in Table 13. These four copolymers were dry blended to yield comparison copolymer 7, which had a melt flow of 7.7 g/10 min.

## TABLE 12

### Comparative Copolymer 6

| Components[a] | Run 6A | Run 6B | Run 6C | Run 6D |
|---|---|---|---|---|
| **Step 1** | | | | |
| $NBL_1$, phm | 0.030 | 0.030 | 0.030 | 0.030 |
| $S_1$, phm | 40.1 | 40.1 | 40.1 | 40.1 |
| Polymerization Time, min | 12 | 12 | 12 | 12 |
| Peak Polymerization Temperature, °C | 83 | 85 | 82 | 76 |
| **Step 2** | | | | |
| $NBL_2$, phm | 0.030 | 0.030 | 0.030 | 0.030 |
| $B_1$, phm | 8 | 8 | 8 | 8 |
| $S_2$, phm | 19.7 | 19.7 | 19.7 | 19.7 |
| Polymerization Time, min | 40 | 40 | 40 | 40 |
| Peak Polymerization Temperature, °C | 86 | 86 | 87 | 79 |
| **Step 3** | | | | |
| $NBL_3$, phm | 0.050 | 0.050 | 0.050 | 0.050 |
| $B_2$, phm | 17.5 | 17.5 | 17.5 | 17.5 |
| $S_3$, phm | 14.6 | 14.6 | 14.6 | 14.6 |
| Polymerization Time, min | 40 | 40 | 40 | 40 |
| Peak Polymerization Temperature, °C | 106 | 106 | 109 | 100 |
| **Step 4 (Coupling)** | | | | |
| Vikoflex 7170, phm | 0.40 | 0.40 | 0.40 | 0.40 |
| Time, min | 16 | 16 | 16 | 16 |
| Temperature, °C | 90 | 88 | 90 | 95 |
| **Step 5 (Terminating)** | | | | |
| Water, phm | 0.2 | 0.2 | 0.2 | 0.2 |
| Carbon Dioxide, phm | 0.4 | 0.4 | 0.4 | 0.4 |
| Time, min (Total) | 25 | 25 | 25 | 25 |
| Temperature, °C | 88 | 82 | 85 | 85 |
| **Step 6 (Stabilizing)** | | | | |
| Stabilizer Mixture, phm | 1.25 | 1.25 | 1.25 | 1.25 |
| Time, min | 5 | 5 | 5 | 5 |
| Temperature, °C | 87 | 83 | 85 | 88 |
| **Recovered Resin** | | | | |
| Melt Flow, g/10 min | 7.3 | 6.8 | 7.1 | 7.5 |

[a]The symbols NBL, S and B, represent, respectively, n-butyllithium initiator, styrene and butadiene. The subscript numbers refer to the numerical order in which that compound was used.

18

TABLE 13

Comparative Copolymer 7

| Components[a] | Run 7A | Run 7B | Run 7C | Run 7D |
|---|---|---|---|---|
| **Step 1** | | | | |
| $NBL_1$, phm | 0.030 | 0.030 | 0.030 | 0.030 |
| $S_1$, phm | 40.1 | 40.1 | 40.1 | 40.1 |
| Polymerization Time, min | 12 | 12 | 12 | 12 |
| Peak Polymerization Temperature, °C | 79 | 80 | 81 | 85 |
| **Step 2** | | | | |
| $NBL_2$, phm | 0.030 | 0.030 | 0.030 | 0.030 |
| $S_2$, phm | 19.7 | 19.7 | 19.7 | 19.7 |
| Polymerization Time, min | 12 | 12 | 12 | 12 |
| Peak Polymerization Temperature, °C | 77 | 76 | 76 | 76 |
| **Step 3** | | | | |
| $B_1$, phm | 8 | 8 | 8 | 8 |
| Polymerization Time, min | 16 | 16 | 16 | 16 |
| Peak Polymerization Temperature, °C | 79 | 72 | 72 | 72 |
| **Step 4** | | | | |
| $NBL_3$, phm | 0.105 | 0.105 | 0.105 | 0.105 |
| $S_3$, phm | 14.6 | 14.6 | 14.6 | 14.6 |
| Polymerization Time, min | 12 | 12 | 12 | 12 |
| Peak Polymerization Temperature, °C | 79 | 94 | 92 | 81 |
| **Step 5** | | | | |
| $B_2$, phm | 17.5 | 17.5 | 17.5 | 17.5 |
| Polymerization Time, min | 16 | 16 | 16 | 16 |
| Peak Polymerization Temperature, °C | 94 | 95 | 95 | 94 |
| **Step 6 (Coupling)** | | | | |
| Vikoflex 7170, phm | 0.39 | 0.39 | 0.39 | 0.39 |
| Time, min | 16 | 16 | 16 | 16 |
| Temperature, °C | 84 | 81 | 80 | 86 |
| **Step 7 (Terminating)** | | | | |
| Water, phm | 0.2 | 0.22 | 0.22 | 0.22 |
| Carbon Dioxide, phm | 0.4 | 0.4 | 0.4 | 0.4 |
| Time, min (Total) | 25 | 25 | 25 | 25 |
| Temperature, °C | 81 | 81 | 85 | 86 |
| **Step 8 (Stabilizing)** | | | | |
| Stabilizer Mixture, phm | 1.25 | 1.25 | 1.25 | 1.25 |
| Time, min | 5 | 5 | 5 | 5 |
| Temperature, °C | 88 | 82 | 83 | 82 |

EP 0 603 852 A1

## TABLE 13 (Con't)

### Comparative Copolymer 7

| Components[a] | Run 7A | Run 7B | Run 7 | Run |
|---|---|---|---|---|
| Recovered Resin Melt Flow, g/10 min | 6.4 | 7.2 | 7.7 | 6.7 |

[a]The symbols NBL, S and B, represent, respectively, n-butyllithium initiator, styrene and butadiene. The subscript numbers refer to the numerical order in which that compound was used.

Example VI

This example compares results of puncture tests of films made from invention copolymers 1 and 2 from Examples I and II with results of puncture tests of films made from comparative copolymers 3, 4, 5, 6, and 7 from Examples III, IV, and V. Each sample was converted into sheet form by melt extrusion at a temperature of about 175-185°C using a sheet die and a cooled polishing roll. Puncture testing was done as described previously. Longer test times indicate that the sample has more environmental stress crack resistance than samples with shorter test times.

The comparative test results are presented in Table 14. These results show that invention copolymers 1 and 2 have an enhanced resistance to environmental stress cracking relative to comparative copolymers without tapered styrene/butadiene segments (copolymers 3 and 7) and without final butadiene segments next preceeding coupling (copolymers 4, 5, and 6).

### TABLE 14

| Puncture Test Results | | | | |
|---|---|---|---|---|
| Copolymer | Type | MF, g/10 min | Puncture Test, min[a] | |
| | | | Curl Up | Curl Down |
| 1 | Invention | 6.9 | 9.8 | 10.3 |
| 2 | Invention | 7.2 | 11 | 14.7 |
| 3 | Comparative | 7.0 | 4.4 | 4.6 |
| 4 | Comparative | 7.5 | 0.31 | 0.34 |
| 5 | Comparative | 6.6 | 0.23 | 0.26 |
| 6 | Comparative | 7.2 | 3.05 | 4.96 |
| 7 | Comparative | 7.7 | 6.04 | 8.20 |

[a]As described in the specifications. Higher numbers indicate more enviromental stress crack resistance.

While the polymers and methods of this invention have been described in detail for the purpose of illustration, the inventive polymers and methods are not to be construed as limited thereby. This patent is intended to cover all changes and modifications within the spirit and scope thereof.

## Claims

1. A method of preparing a polymer under solution polymerization conditions in a reaction zone comprising charging in the following order:
   (a) monovinylaromatic monomer and initiator in the presence of a randomizer,
   (b) initiator and monovinylaromatic monomer,

20

(c) a mixture of monovinylaromatic monomer and conjugated diene monomer,

(d) conjugated diene monomer

wherein in all steps (a) to (d) polymerization is allowed to occur until essentially no free monomer is present; and thereafter

(e) charging the reaction mixture with a coupling agent.

2. The method of claim 1 wherein said monovinylaromatic monomer contains 8 to 12 carbon atoms and said conjugated diene contains 4 to 6 carbon atoms.

3. The method of claim 1 or 2 for preparing a resinous tapered block copolymer wherein said monomers are added in a ratio of monovinylaromatic monomer to conjugated diene monomer of from 55-95 to 5-45 weight %, preferably 60-90 to 10-40 weight % and more preferably 65-85 to 15-35 weight %.

4. The method of any of the preceding claims wherein the weight ratio of monovinylaromatic monomer to conjugated diene monomer in step (c) is within the range of 1:0.63 to 1:2.

5. The method of any of the preceding claims wherein the weight ratio of monovinylaromatic monomer to conjugated diene monomer in steps (b) and (c) is within the range of 1:0.67 to 1:1.8, preferably within the range of 1:0.8 to 1:1.5.

6. The method of claim 1 wherein said monovinylaromatic monomer charged in step (a) is from 10 to 65 %, preferably from 15 to 65 % and more preferably from 20 to 60 %; said monovinylaromatic monomer charged in step (b) is from 10 to 30 %, preferably from 11 to 26 % and more preferably from 12 to 23 %; and said monovinylaromatic monomer charged in step (c) is from 10 to 30 %, preferably from 11 to 26 % and more preferably from 12 to 23 %; each weight % of the total weight % of monovinylaromatic monomer charged in said method.

7. The method of any of the preceding claims wherein said initiator in steps (a) and (b) is charged in amounts to improve environmental stress crack resistance; in particular wherein said initiator in step (b) is present in an amount at least equal to the amount of said initiator in step (a).

8. The method of any of the preceding claims wherein said conjugated diene monomer is 1,3-butadiene, said monovinylaromatic monomer is styrene, said initiator is n-butyllithium, and said randomizer is tetrahydrofuran.

9. The method of any of the preceding claims wherein said coupling agent is epoxidized vegetable oil; the polymerization is carried out in a hydrocarbon diluent and in a substantial absence of oxygen and water at temperatures ranging from -10 °C to 150 °C; after said coupling agent has reacted with products of said polymerization, the system is treated with a terminating agent and then a stabilizer; and wherein, after termination with said terminating agent, any remaining hydrocarbon diluent is flashed off.

10. The method of claim 9 wherein said terminating agent comprises water and carbon dioxide and said stabilizer is chosen from the group of hindered phenols and organophosphites.

11. A polymodal coupled resinous block copolymer of a monovinyl aromatic compound and a conjugated diene, said copolymer having from 55 to 95 weight % polymerized monovinyl aromatic compound based on total weight of monomers in said copolymer; said copolymer having the following polymeric species

S-S-B/S-B-x-B-S/B-S-S

S-S-B/S-B-x-B-S/B-S

S-B/S-B-x-B-S/B-S

S-B/S-B

S-S-B/S-B

wherein

S = monovinylarene block

B = conjugated diene block

B/S = tapered block, and

x = residual coupling agent or coupling site.

12. The copolymer of claim 11 having from 60 to 90, preferably from 65 to 85 weight % polymerized monovinylaromatic compound based on total weight of monomers in said copolymer.

13. Blends of polystyrene and the copolymer of any of claims 1 to 12.

14. The use of the copolymers of any of claims 1 to 12 or of the blends of claim 13 for preparing shaped articles.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | EP-A-0 255 001 (MONTEDIPE S.P.A.)<br>* column 2, line 51 - line 54; claims; examples *<br>--- | 1-14 | C08F297/04<br>C08G81/02 |
| Y | EP-A-0 436 225 (PHILLIPS PETROLEUM COMPANY)<br>* claims; example 1 *<br>----- | 1-14 | |
| | | | TECHNICAL FIELDS SEARCHED (Int.Cl.5)<br><br>C08F<br>C08G |

The present search report has been drawn up for all claims

| Place of search | Date of completion of the search | Examiner |
|---|---|---|
| THE HAGUE | 16 March 1994 | Loiselet-Taisne, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)